# EUROPEAN PATENT SPECIFICATION

(11) **EP 4 156 322 B1**
(45) Date of publication and mention of the grant of the patent: **21.10.2026**
(21) Application number: 22184506.8
(22) Date of filing: 12.07.2022
(51) Int. Cl.: H01M 50/446, H01G 11/84, H01G 11/26, H01M 50/46, H01M 50/443, H01M 50/434, H01M 4/13, H01M 10/054, H01M 10/052, H01G 11/52

(54) **LIQUID COMPOSITION, FUNCTIONAL MATERIAL, AND ENERGY STORAGE DEVICE**
FLÜSSIGE ZUSAMMENSETZUNG, FUNKTIONELLES MATERIAL UND ENERGIESPEICHERVORRICHTUNG
COMPOSITION LIQUIDE, MATÉRIAU FONCTIONNEL ET DISPOSITIF DE STOCKAGE D'ÉNERGIE

(30) Priority: 27.07.2021 JP 2021122270
(43) Date of publication of application: 29.03.2023
(73) Proprietor: Ricoh Company, Ltd., Tokyo 143-8555 (JP)
(72) Inventor: SHIRAISHI, Naoki, Tokyo, 143-8555 (JP); HIGASHI, Ryuji, Tokyo, 143-8555 (JP); MATSUOKA, Kohji, Tokyo, 143-8555 (JP); OHMURA, Tomoya, Tokyo, 143-8555 (JP); HAGIWARA, Hiroki, Tokyo, 143-8555 (JP)
(74) Representative: Marks & Clerk LLP

(56) References cited:
- JP-A- 2020 055 926
- US-A1- 2021 119 195

## Description

### BACKGROUND OF THE INVENTION

### 1. Field of the Invention

The present invention relates to a liquid composition, a functional material, and an energy storage device.

### 2. Description of the Related Art

Conventional energy storage devices such as lithium ion secondary batteries, electric double layer capacitors, lithium ion capacitors, redox capacitors, and the like use paper, non-woven fabric, and porous film as separators in order to prevent short circuits between the positive and negative electrodes.

In recent years, a separator-integrated electrode in which an electrode composite material layer and a particle layer are sequentially formed on an electrode substrate has been used (for example, Japanese Patent Application Laid-Open No. 2000-277386). Separator-integrated electrodes are typically manufactured by applying a liquid composition containing particles onto an electrode composite material layer with a thickness of 10 µm or less. By discharging the liquid composition from a liquid discharge head, a uniform particle layer can be easily applied (for example, Japanese Patent Application Laid-Open 2006-173001).

JP2020055926A discloses a non-aqueous ink set of two inks whose pigment particles (inorganic oxides such as alumina/silica) are oppositely charged - or lie on opposite sides of a dispersant-content viscosity maximum. When the two inks are deposited near-simultaneously and mix, weak ionic interaction prevents pigment aggregation while raising the mixture's viscosity. This suppresses penetration into the substrate, yielding uniform insulating separator layers on electrodes for lithium-ion battery separator-integrated electrodes.

Liquid compositions are generally prepared by dispersing inorganic particles and dispersants uniformly in a solvent as solid components. In order to form such a uniform particle layer, attempts have been made to disperse primary particles by adding a dispersant, such as a surfactant, in the liquid composition and using a dispersion device, such as a bead mill, so as to dissociate the assembly of the inorganic particles as much as possible, and to disperse the independent primary particles evenly in the solvent.

### SUMMARY OF THE INVENTION

### [Problem to be solved by the invention]

However, in such liquid compositions, the specific gravity of the inorganic particles is higher than that of the solvent, which is the dispersing medium, so that even if dispersion is achieved, the inorganic particles precipitate due to the particles own weight in the liquid composition after static storage (hereinafter referred to as "self-weight precipitation"). For example, even when particles with large specific gravity, such as alumina, are dispersed in an organic solvent using a dispersant, it is difficult for conventional liquid compositions to re-disperse the particles once the particles are self-weight precipitated.

Also, if the re-dispersion of the inorganic particles in the liquid composition is insufficient, the physical properties of the liquid composition may be changed, for example, agglomeration may occur in the liquid composition resulting in a change in particle size distribution, and/or the viscosity and thixotropy of the liquid composition may be changed. As a result, when, for example, a functional film is formed on a substrate using the liquid composition, there is a concern that discharge failure occurs when the liquid composition is discharged using an ink jet, resulting in unevenness in coating.

An object of the present invention is to provide a liquid composition that is capable of readily re-dispersing even when inorganic particles in the liquid composition are self-weight precipitated.

### [Means for Solving Problems]

One aspect of the invention is to provide a liquid composition as defined in claim 1. Preferred embodiments are defined in the dependent claims.

### [Effects of the Invention]

According to an aspect of the invention, a liquid composition that is capable of readily re-dispersing even when inorganic particles in the liquid composition are self-weight precipitated is provided.

### [Brief Description of Drawings]

FIG. 1 is a schematic diagram of an inorganic particle;
FIG. 2 is an interaction potential energy curve between particles;
FIG. 3 is a cross-sectional view illustrating an example of a negative electrode;
FIG. 4 is a schematic diagram illustrating an example of a method of manufacturing a negative electrode;
FIG. 5 is a schematic diagram illustrating another example of a method of manufacturing a negative electrode;
FIG. 6 is a schematic diagram illustrating a modification of a liquid discharge device of FIG. 4 and FIG. 5;
FIG. 7 is a cross-sectional view illustrating an example of a positive electrode;
FIG. 8 is a cross-sectional view illustrating an example of an electrode device constituting a charging device;
FIG. 9 is a cross-sectional view illustrating an example of an energy storage device;
FIG. 10 is a schematic perspective diagram illustrating an example of an ink jet printing device;
FIG. 11 is a schematic configuration diagram illustrating an example of a separator-integrated electrode; and
FIG. 12 is a cross-sectional view of a line A-A of FIG. 11.

### [Mode for Carrying Out the Invention]

Hereinafter, embodiments of the present invention will be described.

### <Liquid Composition>

The liquid composition of the present embodiment contains first inorganic particles, second inorganic particles, a dispersant, and a solvent. Here, the inorganic particles refer to particles of an inorganic compound such as a metal or a metal oxide. The liquid composition of the present embodiment may optionally contain an auxiliary solvent, binder, or other additives.

### [First Inorganic Particles]

The first inorganic particles (hereinafter referred to as inorganic particles A) are inorganic particles with a median size in the range from 200 nm to less than 1000 nm.

As used herein, median size refers to a particle size (hereinafter referred to as D50) with a cumulative frequency of 50% on a number basis. A median size of 1,000 nm or more tends to cause unevenness in the coating process when a film thickness in micrometers is obtained. A median size of less than 200 nm makes it difficult to maintain a uniform dispersion state.

Examples of the material (inorganic particles A) constituting the first inorganic particles include, but are not limited to, aluminum oxide, silica, calcium carbonate, titanium oxide, calcium phosphate, titanium oxide, silicon oxide, zirconium oxide, and the like. One type of these first inorganic particles may be used alone or two or more types of these inorganic particles may be used in combination.

Among these first inorganic particles, inorganic oxides such as aluminum oxide (alumina) are preferred for use in the manufacture of separator-integrated electrodes, as described below, because of their high insulation property and heat resistance property.

The type of alumina used as the first inorganic particles is not particularly limited. Examples of aluminas include α-alumina, γ-alumina, β-alumina, fused alumina, and the like. Among these, α-alumina is preferable from the viewpoint of insulation property and abrasion resistance property.

One type of these aluminas may be used alone or two or more types of these aluminas may be used in combination. When two or more kinds of alumina are used, a main component of the alumina is preferably α-alumina from the viewpoint of insulation property and abrasion resistance property.

Here, when the main component is α-alumina, the content of α-alumina in the total alumina is 50% by mass or more. The content is preferably 60% by mass or more, and more preferably 70% by mass or more. In the above-described range, a particle layer with excellent insulation property and abrasion resistance property can be formed.

The alumina contained in the liquid composition of the present embodiment may be equivalent to a solid content in the liquid composition. The percentage of the solid content in the liquid composition is in the range from 20% by mass to 50% by mass, and preferably in the range from 35% by mass to 45% by mass.

Such content of alumina indicates higher solid content than liquid compositions, such as inks. By adjusting the alumina content to such a range, unevenness in coating thickness after the liquid composition is applied and dried can be suppressed.

### [Second Inorganic Particles]

The second inorganic particles (hereinafter may be referred to as inorganic fine particles or inorganic fine particles B) are inorganic particles with an average size of less than 30 nm.

As used herein, the average size is the average of the longitudinal diameter of the particles as measured by Transmission Electron Microscope (TEM) observation. If the average size is 30 nm or more, the energy barrier may not be sufficiently small in the interaction potential energy between particles as described below.

Here, the inorganic fine particles B with an average size of less than 30 nm can be separated from other particles and collected, for example, by extracting the supernatant liquid obtained by centrifugation.

For example, according to Stokes' law, alumina with a particle density of 3.95 g/cm³ has a liquid viscosity of 10 kg/m·s and a liquid density of 1.03 g/cm³ in a solvent. The liquid is centrifuged at 3,000 rpm for 20 minutes at a rotation radius of 10 cm. If the particle size is greater than or equal to 30 nm, it is determined that the particles are precipitated for 1.8 cm. Therefore, it is possible to collect inorganic fine particles less than 30 nm by collecting the supernatant liquid. [Mathematical Formula 1] ${d}_{p} = \sqrt{\frac{18 μ}{\left({ρ}_{p}-{ρ}_{f}\right) g} \frac{h}{t}}$ In the above formula, dp is the particle size, µ is the viscosity of the liquid, ρp is the density of the particle, ρf is the density of the liquid, g is gravity, h is the distance travelled downward, and t is the time required to precipitate the distance h.

Examples of the materials constituting the second inorganic particles (inorganic fine particles B) include, but are not limited to, aluminum oxide, silica, calcium carbonate, titanium oxide, calcium phosphate, titanium oxide, silicon oxide, zirconium oxide, and the like. One type of these second inorganic particles may be used alone or two or more types of these inorganic particles may be used in combination.

Among these second inorganic particles, inorganic oxides, such as aluminum oxide (alumina), are preferably used for use in manufacturing the separator-integrated electrode described below because of its high insulation property and heat resistance property.

The type of alumina used as the second inorganic particles is not particularly limited. Examples of the aluminas include α-alumina, γ-alumina, β-alumina, fused alumina, and the like. Among these, α-alumina is preferable from the viewpoint of insulation property and abrasion resistance property.

The material constituting the inorganic fine particles B may be the same as or different from the material constituting the above-described inorganic particles A.

In addition, although the content of the second inorganic particles (inorganic fine particles B) is not particularly limited, the content of the second inorganic particles (inorganic fine particles B) is preferably in the range from 1% by mass to 5% by mass relative to the total mass of the first inorganic particles (inorganic particles A).

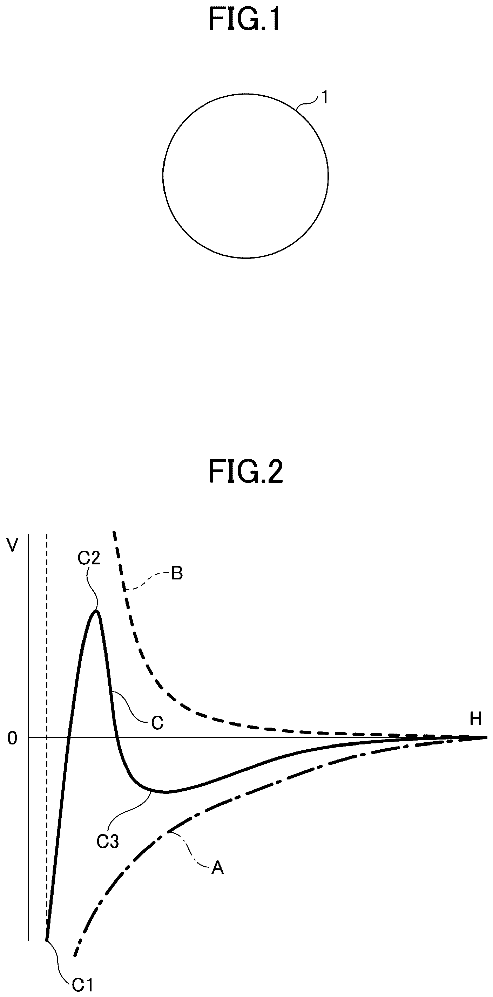

Embodiments in which the liquid composition contains the first and second inorganic particles are not particularly limited. FIG. 1 is a schematic diagram of inorganic particles contained in the liquid composition of the present embodiment. In the present embodiment, a first inorganic particle 1 and a second inorganic particle (not shown) are mixed in the liquid composition.

### [Dispersant]

A dispersant is a compound that adsorbs or binds to the surface of a particle and functions to inhibit agglomeration of the particles by electrostatic repulsion due to coulombic forces or steric hindrance due to molecular chains.

The number average molecular weight of the dispersant is not particularly limited but is usually from 1,000 to 100,000. From the viewpoint of suppressing the increase in viscosity of the liquid composition, the number average molecular weight of the dispersant is more preferably from 1,000 to 10,000, and even more preferably from 1,000 to 5,000.

The dispersant preferably has a dispersible group. The dispersible group is preferably a nonionic group from the viewpoint of ionic conductivity, for example, when the liquid composition is used as a functional material in a lithium ion battery. Here, nonionic does not indicate ionicity and nonionic group does not include ionic substituents. It should be noted that a dispersant having a nonionic group as a dispersible group corresponds to a nonionic surfactant.

The dispersible group may have a structure that is soluble for a solvent and auxiliary solvent describe later. However, when used as a lithium-ion secondary battery, an oligoether group is preferably used from the viewpoint of ionic conductivity. The oligoether group is a group from which the hydroxyl group is removed from the end of a polymer of ethylene glycol or propylene glycol.

The molecular weight of the polymer of ethylene glycol or propylene glycol is preferably 100 or more and 10,000 or less, and further preferably 100 or more and 5,000 or less. When the molecular weight of the polymer of ethylene glycol or propylene glycol is 100 or more, the dispersibility of the inorganic particles (for example, the alumina particles) is improved. When the molecular weight is 10,000 or less, the increase in the viscosity of the liquid composition can be suppressed.

The end of the unbound side of the oligoether group may be a hydroxyl group, a methoxy group, an ethoxy group, a propoxy group, or the like. If a dispersant having an oligoether group is used, the dispersibility of the inorganic particles can be improved even when a highly polar solvent is used as a solvent.

When the first inorganic particles are alumina particles, the dispersant is preferably a polymer dispersant having an ionic group having the polarity opposite to that of which the alumina particles are charged as an adsorptive group from the viewpoint of adsorption strength with the alumina particles.

Examples of commercially available polymeric dispersants include DISPERBYK-103, DISPERBYK-118, DISPERBYK-2155 (manufactured by BYK-Chemie), NOPCOSPERSE-092, SN-SPERSE-2190, SN-DISPERSANT-9228 (manufactured by SAN NOPCO Limited), ESLEAM (Registered Trademark), AD-3172M, ESLEAM 2093, MALIALIM (Registered Trademarks), AKM-0513, MALIALIM HKM-50A, MALIALIM HKM-150A, MALIALIM SC-0505K, MALIALIM SC-1015F, MALIALIM SC-0708A (manufactured by NOF Corporation), and the like.

One type of these polymeric dispersants may be used alone or two or more types of these polymeric dispersants may be used in combination. The content of the polymeric dispersant to the inorganic particles is not particularly limited, and usually in the range from 0.01% by mass to 10% by mass. When the dispersibility of the inorganic particles is considered, the content of the polymeric dispersant to the inorganic particles is preferably in the range from 0.1% by mass to 10% by mass.

### [Binder]

A binder may be added to the liquid composition of the present embodiment. Applying the liquid composition containing the binder on a substrate as described below can improve the strength of the functional membrane formed using the liquid composition.

Examples of the binders include, but are not limited to, polyvinylidene fluoride, styrene butadiene rubber, acrylic resin, and the like. One type of these binders may be used alone or two or more types of these binders may be used in combination. The binder may also be dissolved or dispersed in a liquid composition.

A precursor of the binder may be used instead of the binder. Examples of the precursors of the binder include monomers and the like. For example, the liquid composition containing monomers and optionally further containing a polymerization initiator is applied onto an absorbent medium (hereinafter, may be referred to as a substrate), and subsequently heated or illuminated to polymerize the monomers to form a binder.

### [Solvent]

A solvent (hereinafter, may be referred to as a solvent A) can disperse inorganic particles in the liquid composition. The content of solvent A is suitably adjusted. The components of solvent A are not particularly limited, but an aqueous solvent or a non-aqueous solvent.

The aqueous solvent is not particularly limited and includes, for example, water, mixtures of water and polar solvents, and the like.

Examples of polar solvents include methanol, ethanol, propanol, butanol, pentanol, hexanol, ethylene glycol, hexylene glycol, N-methyl-2-pyrrolidone (NMP), dimethyl sulfoxide (DMSO), N,N-dimethylformamide (DMF), acetone, tetrahydrofuran (THF), and the like. The polar solvents may be used alone or in a combination of two or more polar solvents.

The non-aqueous dispersion medium is not particularly limited and includes, for example, lactams, alcohols, sulfoxides, esters, ketones, and the like.

Examples of lactams include 1-methyl-2-pyrrolidone, 2-pyrrolidone, and the like.

Examples of alcohols include isopropyl alcohol, butanol, diacetone alcohol, and the like.

Examples of sulfoxides include dimethyl sulfoxide and the like.

Examples of esters include ethyl acetate, butyl acetate, ethyl lactate, ethylene glycol diacetate, and the like.

Examples of ketones include diisobutyl ketone, 2-butanone, 2-pentanone, diacetone alcohol, and the like.

One type of these non-aqueous solvents may be used alone or two or more types of these non-aqueous solvents may be used in combination.

The solvent A is preferably a solvent having an affinity with the inorganic particles (for example, alumina particles), and the solvent A is more preferably a non-aqueous solvent.

### [Auxiliary Solvent]

An auxiliary solvent (hereinafter referred to as "solvent B") is a solvent different from that of solvent A. The solvent B can optionally be formulated to compensate for the lack of function with solvent A.

Examples of the solvent B include a solvent having a function of dispersing inorganic particles (for example, alumina particles), a solvent having a high boiling point for preventing the drying of the nozzle of the liquid discharge head, a solvent having a suitable viscosity and surface tension when discharging from the liquid discharge head, and a solvent capable of preventing the absorption of alumina particles into the electrode composite material layer.

The components of solvent B are not particularly limited, but are aqueous solvents or non-aqueous solvents.

The aqueous solvent is not particularly limited. Examples of the aqueous solvents include water, mixtures of water and polar solvents, and the like. Examples of the polar solvents include methanol, ethanol, propanol, butanol, pentanol, hexanol, ethylene glycol, hexylene glycol, NMP, DMSO, DMF, acetone, THF, and the like. The polar solvent may be used alone or in a combination of two or more aqueous solvents.

The non-aqueous dispersion medium is not particularly limited and includes, for example, ethers, glycols, esters, alcohols, or lactams.

Examples of ethers include propylene glycol monopropyl ether and the like.

Examples of glycols include propylene glycol, ethylene glycol, triethylene glycol, hexylene glycol, and the like.

Examples of esters include ethyl lactate, ethylene carbonate, ethylene glycol diacetate, and the like.

Examples of alcohols include cyclohexanol, propylene glycol monopropyl ether, and the like. Examples of lactams include 2-pyrrolidone and the like.

One type of these non-aqueous solvents may be used alone or two or more types of these non-aqueous solvents may be used in combination.

The solvent B is preferably a solvent having affinity with inorganic particles such as alumina, and the solvent B is more preferably a non-aqueous solvent.

### [Other Additives]

The liquid composition of the present embodiment may further contain other components according to purposes of adjusting viscosity, adjusting surface tension, controlling evaporation of the solvent, improving the solubility of additives, improving a dispersibility of alumina particles, sterilization, and the like. Examples of other additives include, for example, surfactants, pH adjusters, corrosion inhibitors, antiseptics, mold inhibitors, antioxidants, anti-reduction agents, evaporation accelerators, chelating agents, and the like.

### [Method of Preparing Liquid Composition]

The method of preparing the liquid composition of the present embodiment can be formed by mixing and dispersing a first inorganic particles (inorganic particles A), a second inorganic particles (inorganic fine particles B), a dispersant, and a solvent A. A binder and a solvent B may be added to the mixture as needed.

The method of dispersing the liquid composition is not particularly limited, but for example, a known dispersion device can be used. Examples of dispersion devices include a stirrer, a ball mill, a beads mill, a ring-type mill, a high-pressure disperser, a rotary highspeed shear device, an ultrasonic disperser, and the like.

The effect obtained by the liquid composition of the present embodiment can be explained by the DLVO theory representing the dispersed/agglomerated state acting between the particles. The DLVO theory explains that the dispersion/agglomeration phenomenon of particles can be predicted by the balance between the osmotic repulsive force derived from the electric double layer between particles and the attractive force between particles, which is the sum of the London-van der Waals forces.

FIG. 2 is a potential energy curve of interaction between particles based on the DLVO theory. In the graph of FIG. 2, H on the horizontal axis indicates the interparticle distance, V on the vertical axis indicates the potential energy, A indicates the London-van der Waals attraction, B indicates the electric double layer repulsive force (repulsive force), C indicates the potential energy due to the total interaction of attraction and repulsion, C1 indicates the minimum point of primary agglomeration, C2 indicates the maximum point of energy barrier, and C3 indicates the minimum point of secondary agglomeration.

According to the DLVO theory, in order to restore the primary agglomerated particles to the dispersed state again, it is necessary to exceed the energy barrier (C2) of the potential energy due to the total interaction (C) between the attractive force (A) and the repulsive force (B). Therefore, in order to improve the re-dispersibility of the liquid composition, it is necessary to reduce the energy barrier (C2) of the potential energy acting between such particles.

The inventors found that adding a certain amount of inorganic fine particles, defined by the average size, with respect to inorganic particles defined by the median size, increases the London-van der Waals force (A) and decreases the energy barrier (C2) of potential energy. The effect of the liquid composition of the present invention is thought to be achieved by this mechanism, the re-dispersibility of the liquid composition containing inorganic particles can be increased.

That is, the liquid composition of the present embodiment includes first inorganic particles having a median size in a range from 200 nm to less than 1000 nm, second inorganic particles having an average size of less than 30 nm, a dispersant, and a solvent, as described above. This can reduce the energy barrier of potential energy between the inorganic particles in the liquid composition. Therefore, the dispersibility of the liquid composition can be improved even when the liquid composition contains inorganic particles having a high specific gravity relative to the solvent.

Also, in the present embodiment, as described above, the smaller energy barrier of potential energy acting between the inorganic particles in the liquid composition allows the inorganic particles with large specific gravity relative to the solvent to easily re-disperse in the liquid composition even if the inorganic particles are precipitated by self-weight precipitation in the liquid composition. Therefore, according to the present embodiment, the liquid composition with excellent storage stability such as storage and transport can be provided.

Further, in this embodiment, the inorganic particles in the liquid composition can easily be re-dispersed even when the inorganic particles are self-weight precipitated, when the liquid composition is used after the liquid composition has been stored, a large-scale stirring operation is no longer necessary, which improves re-dispersion efficiency and reduces product cost. In addition, when the functional film is formed on the substrate using the liquid composition, it is possible to suppress coating unevenness when the liquid composition is discharged using, for example, an ink jet.

In the liquid composition of the present embodiment as described above, adjusting the content of the second inorganic particles with respect to the total amount of the first inorganic particles being in the range from 1% by mass to 5% by mass further reduces the energy barrier of potential energy acting between inorganic particles in the liquid composition. Therefore, the re-dispersibility of the inorganic particles can be improved even after the inorganic particles having a large specific gravity with respect to the solvent have precipitated by self-weight precipitation in the liquid composition.

In the liquid composition of the present embodiment, as described above, the use of α-alumina as the first inorganic particles further reduces the energy barrier of potential energy acting between inorganic particles in the liquid composition.
Therefore, the re-dispersibility of the inorganic particles can be improved even after the inorganic particles having a large specific gravity with respect to the solvent have precipitated by self-weight precipitation in the liquid composition.

In the liquid composition of the present embodiment, as described above, the percentage of solid content is in the range from 20% by mass to 50% by mass, so that unevenness in coating when the liquid composition is applied to form a coating film can be suppressed.

In the liquid composition of the present embodiment, as described above, by using a non-aqueous solvent as the solvent, the affinity of the solvent can be increased between inorganic particles, such as alumina. This can improve both the dispersibility during preparation and the re-dispersibility after self-weight precipitating in the liquid composition, containing the inorganic particles. In addition, since the boiling point of the non-aqueous solvent is higher than that of the aqueous solvent, drying when a coating film is formed by applying the liquid composition is facilitated.

In the liquid composition according to the present embodiment, as described above, by using a nonionic surfactant as a dispersant, ionic conductivity can be increased when used as a functional material of a lithium ion battery. Therefore, according to the present embodiment, when the liquid composition is used for a lithium ion secondary battery, the battery characteristics of the lithium ion battery can be improved.

In the liquid composition of the present embodiment, as described above, when the liquid composition is used as a functional material in a lithium ion battery, the ionic conductivity can be further increased by using a dispersant having an oligoether group. Therefore, according to the present embodiment, when the liquid composition is used for a lithium ion secondary battery, the battery characteristics of the lithium ion battery can be further improved.

### <Functional Material>

The functional material of the present embodiment includes the liquid composition described above. That is, the liquid composition described above can be used for the functional material of the present embodiment. Specifically, the liquid composition described above as the functional material can be applied to the substrate described below to form a functional film on the substrate.

### [Method of Applying Liquid Composition]

As the method of applying the liquid composition of the present embodiment, a method of discharging liquid such as an ink jet ejection method is preferably used because the ejection position can be controlled.

Examples of the method of discharging the liquid composition in the liquid discharge method include a method of applying mechanical energy to the liquid composition, a method of applying thermal energy to the liquid composition, and the like. Among them, a method of applying mechanical energy to the liquid composition is preferably used in terms of dispersion stability.

When the liquid discharge method is used, a technique using the principle of liquid discharge of a known liquid discharge device may be applied. However, a solvent having a flow passage installed in the liquid discharge device and a nozzle-resistant solvent of the liquid discharge head are preferably used as the solvents A and B contained in the liquid composition.

### [Method of Manufacturing Electrodes]

The liquid composition of the present embodiment can be used in the manufacture of electrodes having a functional film. Such a method of manufacturing electrodes having a functional film includes a step of discharging the liquid composition of the present embodiment onto an electrode substrate.

Materials of constituting the electrode substrate (for example, current collectors, electrodes having current collectors and active material layers, and the like) are not particularly limited as long as the materials have conductivity and are stable to a potential to be applied.

The method of manufacturing electrodes using the liquid composition of the present embodiment further preferably includes a step of pressurizing the electrode substrate from which the liquid composition is discharged. This prevents the electrode components from peeling off and improves the reliability of the device.

The electrode used in the liquid composition of the present embodiment has a negative electrode and a positive electrode.

### [Negative Electrode]

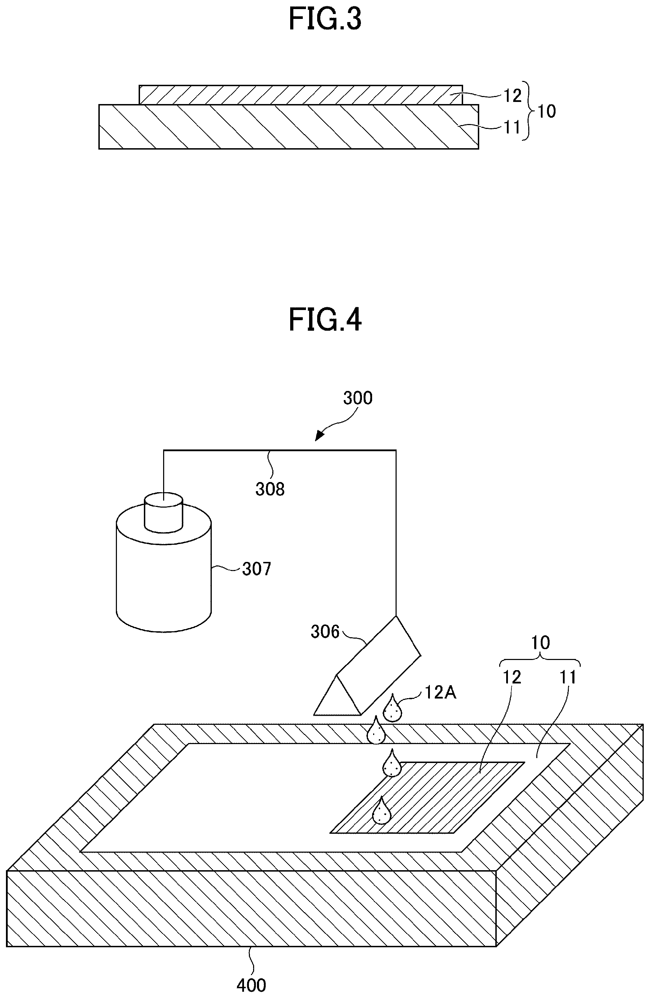

An example of the negative electrode is indicated in FIG. 3. The negative electrode 10 is formed on one surface of the negative electrode substrate 11 with a negative electrode composite material layer 12 including a negative electrode active material and a polymer. The negative electrode composite material layer 12 may be formed on both surfaces of the negative electrode substrate 11.

The shape of the negative electrode 10 is not particularly limited and may include, for example, a flat plate and the like. Examples of the materials constituting the negative electrode substrate 11 include stainless steel, nickel, aluminum, copper, and the like.

### [Method of Manufacturing Negative Electrodes]

FIG. 4 indicates an example of a method of manufacturing the negative electrode. The method of manufacturing the negative electrode 10 includes a step of discharging a liquid composition 12A onto the negative electrode substrate 11 using a liquid discharge device 300.

Here, the liquid composition 12A includes a negative electrode active material, a dispersion medium (a solvent), and a polymer. The liquid composition 12A is stored in a tank 307 and fed from the tank 307 through a tube 308 to a liquid discharge head 306.

The liquid discharge device 300 may also be provided with a mechanism to cap a nozzle (not illustrated) of the discharge head 306 to prevent the liquid composition 12A from drying when the liquid composition 12A is not discharged from the liquid discharge head 306.

In manufacturing the negative electrode 10, the negative electrode substrate 11 is placed on a stage 400 capable of being heated, droplets of the liquid composition 12A are discharged to the negative electrode substrate 11, and then heated. The stage 400 may then move, and the liquid discharge head 306 may move.

When the liquid composition 12A discharged to the negative electrode substrate 11 is heated, it may be heated by the stage 400 or by a heating mechanism other than the stage 400.

The heating mechanisms are not particularly limited as long as the heating mechanisms do not directly contact with the liquid composition 12A. Examples of the heating mechanisms include resistive heating heaters, infrared heaters, fan heaters, and the like. A plurality of heating mechanisms may be provided.

The heating temperature is not particularly limited as long as the temperature is capable of volatilizing the dispersion medium. The heating temperature is preferably in the range of 70°C to 150°C in terms of power consumption.

UV light may also be irradiated when the liquid composition 12A discharged to the negative electrode substrate 11 is heated.

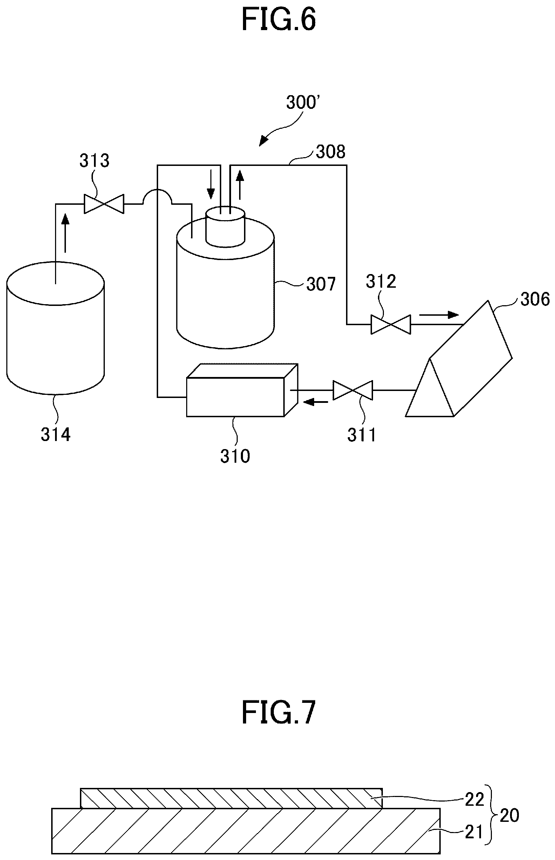

FIG. 6 illustrates another example of a method of manufacturing negative electrodes. In FIG. 6, the parts common to FIG. 4 may be designated by the same reference numerals as those in FIG. 4 and the description thereof may be omitted.

The method of manufacturing the negative electrode 10 includes a step of discharging the liquid composition 12A onto the negative electrode substrate 11 using the liquid discharge device 300.

First, an elongate negative electrode substrate 11 is prepared. Then, the negative electrode substrate 11 is wound around a cylindrical core and set to a feed roller 304 and a take-up roller 305 so that the side where the negative electrode composite material layer 12 is formed is on the upper side in FIG. 6. Here, the feed roller 304 and the take-up roller 305 rotate counterclockwise (the direction of arrow in FIG. 6), and the negative electrode substrate 11 is conveyed from the right direction to the left direction in FIG. 6.

The droplets of the liquid composition 12A are discharged from the liquid discharge head 306 disposed above the negative electrode substrate 11 between the feed roller 304 and the take-up roller 305 onto the negative electrode substrate 11 to be conveyed. The droplets of the liquid composition 12A are discharged to cover at least a portion of the negative electrode substrate 11.

A plurality of liquid discharge heads 306 may be disposed in a direction substantially parallel to or substantially perpendicular to the conveying direction of the negative electrode substrate 11.

Next, the negative electrode substrate 11 on which the liquid composition 12A is discharged is conveyed to a heating mechanism 309 by the feed roller 304 and the take-up roller 305. As a result, the dispersion medium contained in the liquid composition 12A on the negative electrode substrate 11 is volatilized to form the negative electrode composite material layer 12 to obtain the negative electrode 10. The negative electrode 10 is then cut to a desired size by a punching process or the like.

The heating mechanism 309 is not particularly limited as long as the heating mechanism does not directly contact with the liquid composition 12A. Examples of the heating mechanisms include resistive heating heaters, infrared heaters, fan heaters, and the like. The heating mechanism 309 may be disposed on either above or below of the negative electrode substrate 11, or a plurality of the heating mechanisms may be disposed.

The heating temperature is not particularly limited as long as the temperature is capable of volatilizing the dispersion medium. The heating temperature is preferably in the range of 70°C to 150°C in terms of power consumption.

UV light may also be irradiated when the liquid composition 12A discharged to the negative electrode substrate 11 is heated.

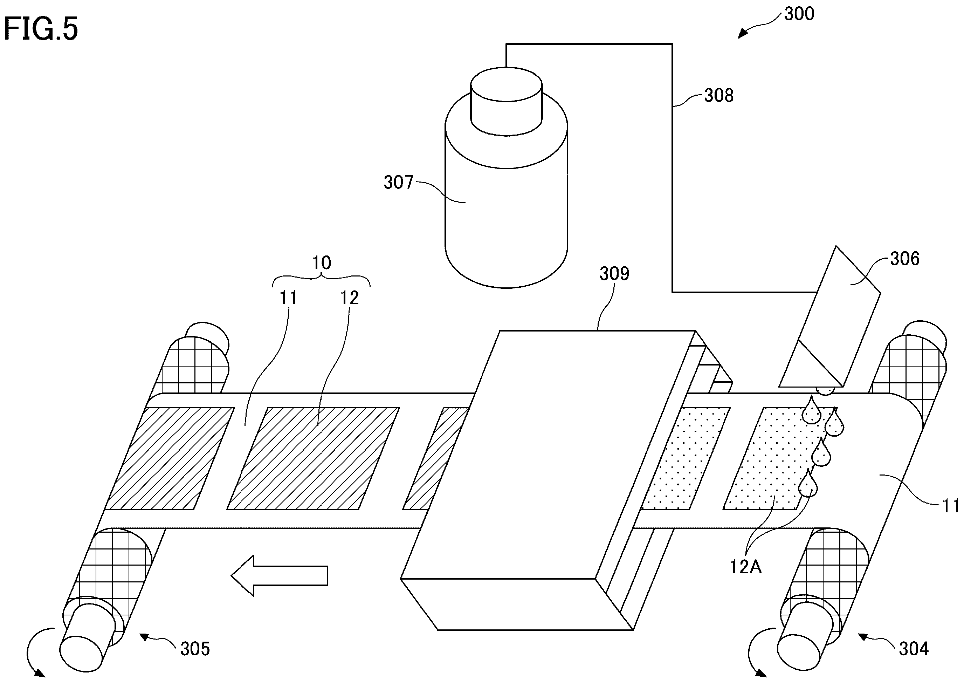

FIG. 6 indicates a modification of the liquid discharge device 300 in FIGS 4 and 5. In FIG. 6, the parts common to FIG. 5 may be designated by the same reference numerals as those in FIG. 5 and the description thereof may be omitted.

A liquid discharge device 300' illustrated in FIG. 6 controls a pump 310 and valves 311, 312 to allow the liquid composition 12A to circulate through the liquid discharge head 306, the tank 307, and the tube 308.

The liquid discharge device 300' is also provided with an external tank 314, and it is possible to supply the liquid composition 12A from the external tank 314 to the tank 307 by controlling the pump 310 and the valves 311, 312, and 313 when the liquid composition 12A in the tank 307 is reduced.

If the liquid discharge device 300 or 300' is used, the liquid composition 12A can be discharged to the desired portion of the negative electrode substrate 11. Further, if the liquid discharge device 300 or 300' is used, the surfaces of the negative electrode substrate 11 and the negative electrode composite material layer 12 that contact each other can be bonded. Furthermore, if the liquid discharge device 300 or 300' is used, the thickness of the negative electrode composite material layer 12 can be uniform.

### [Positive Electrode]

An example of a positive electrode is indicated in FIG. 7. In a positive electrode 20, a positive electrode composite material layer 22 including a positive electrode active material and a polymer is formed on one surface of a positive electrode substrate 21. The positive electrode composite material layer 22 may be formed on both surfaces of the positive electrode substrate 21.

The shape of the positive electrode 20 is not particularly limited and may include, for example, a flat plate and the like. Examples of the materials constituting the positive electrode substrate 21 include stainless steel, aluminum, titanium, tantalum, and the like.

### [Method of Manufacturing Positive Electrode]

The method of manufacturing the positive electrode 20 is similar to the method of manufacturing the negative electrode 10 except that the liquid composition is discharged onto the positive electrode substrate 21. Here, the liquid composition includes a positive electrode active material, a dispersion medium (a solvent), and a polymer.

### <Energy Storage Device>

An energy storage device according to the present embodiment can be formed using the functional material described above. That is, the functional material including the above-described liquid composition is used to form the energy storage device of the present embodiment. Specifically, the functional material including the above-described liquid composition can be used to form electrochemical devices such as secondary batteries.

### [Method of Manufacturing Electrochemical Device]

A method of manufacturing the electrochemical device (the energy storage device) includes a step of manufacturing the electrodes using the method of manufacturing the electrodes described above.

### [Electrode Device]

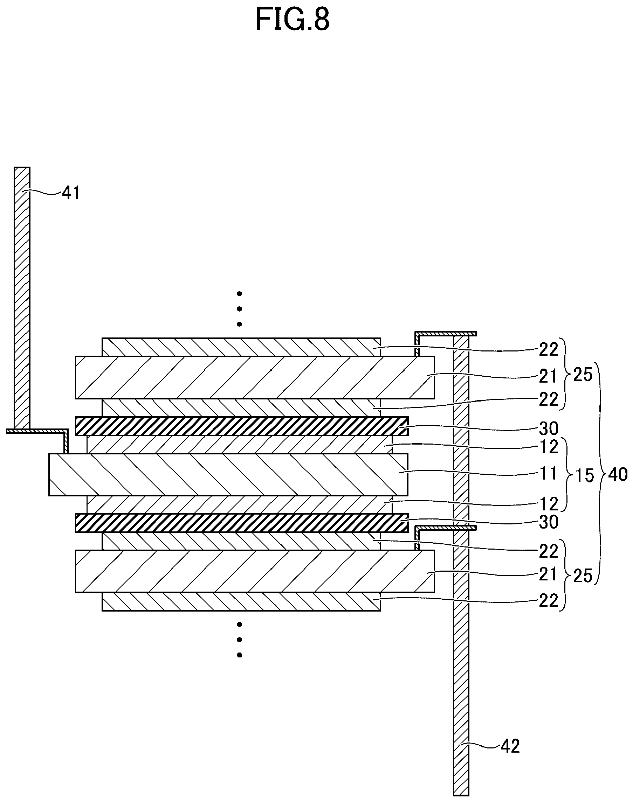

FIG. 8 indicates an example of an electrode device constituting an energy storage device (an electrochemical device) of the present embodiment. In an electrode device 40, a negative electrode 15 and a positive electrode 25 are laminated through a separator 30. Here, the positive electrode 25 is laminated to both sides of the negative electrode 15. A drawline 41 is connected to the negative electrode substrate 11, and a drawline 42 is connected to the positive electrode substrate 21.

The negative electrode 15 is similar to the negative electrode 10 except that the negative electrode composite material layer 12 is formed on both sides of the negative electrode substrate 11.

The positive electrode 25 is similar to the positive electrode 20 except that the positive electrode composite material layer 22 is formed on both sides of the positive electrode substrate 21.

The number of layers of the negative electrode 15 and the positive electrode 25 of the electrode device 40 is not particularly limited. The number of the negative electrodes 15 and the number of the positive electrodes 25 of the electrode device 40 may be the same or may be different.

### [Separator]

The separator 30 is provided between the negative electrode 15 and the positive electrode 25 to prevent short circuit between the negative electrode 15 and the positive electrode 25.

The separator 30 is not particularly limited and may be appropriately selected depending on a purpose. Examples of the separator 30 include paper such as kraft paper, vinylon mixed paper, synthetic pulp mixed paper, polyolefin non-woven fabric such as cellophane, polyethylene graft film, polypropylene meltblown non-woven fabric, polyamide non-woven fabric, glass fiber non-woven fabric, micropore membrane, and the like.

The size of the separator 30 is not particularly limited if the size of the separator 30 can be used in the electrochemical device.

The separator 30 may be a single layer structure or a laminated structure.

When a solid electrolyte is used, the separator 30 may be omitted.

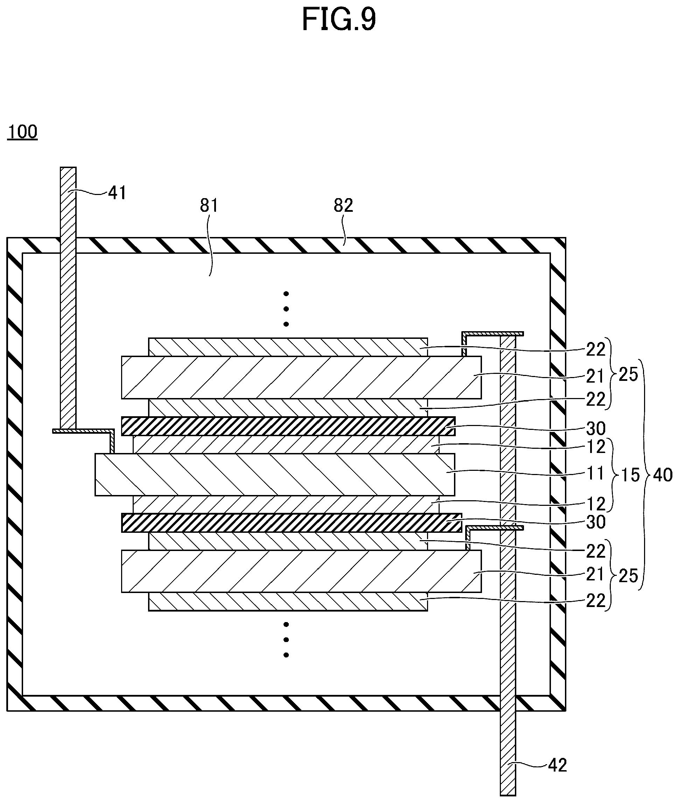

FIG. 9 illustrates a secondary battery as an example of the energy storage device (electrochemical element) of the present embodiment. In FIG. 9, the parts common to FIG. 8 may be designated by the same reference numerals as those in FIG. 8 and the description thereof may be omitted.

In a secondary battery 100, an electrolyte layer 81 is formed by injecting an electrolyte aqueous solution or a non-aqueous electrolyte into the electrode device 40 as illustrated in FIG. 8 and is sealed by an outer sheath 82. In the secondary battery 100, the drawlines 41 and 42 are drawn out of the outer sheath 82.

The secondary battery 100 may have other members as desired. As the secondary battery 100, there is no particular limitation. For example, a lithium ion secondary battery and the like may be used.

The shape of the secondary battery 100 is not particularly limited. Examples of the shape of the secondary battery 100 include a laminate type, a cylinder type in which the sheet electrode and the separator are spiraled, a cylinder type in an in-side out structure in which the pellet electrode and the separator are combined, and a coin type in which the pellet electrode and the separator are laminated.

### [Electrolyte Aqueous Solution]

Examples of the electrolyte salt constituting the electrolyte aqueous solution include sodium hydroxide, potassium hydroxide, sodium chloride, potassium chloride, ammonium chloride, zinc chloride, zinc acetate, zinc bromide, zinc iodide, zinc tartrate, zinc perchlorate, and the like.

### [Non-Aqueous Electrolyte]

As the non-aqueous electrolyte, a solid electrolyte or a non-aqueous electrolyte solution may be used. Here, the non-aqueous electrolyte solution is an electrolyte solution in which the electrolyte salt is dissolved in the non-aqueous solvent.

### [Non-Aqueous Solvent]

The non-aqueous solvent is not particularly limited, and for example, an aprotic organic solvent is preferably used.

As the aprotic organic solvent, carbonate-based organic solvents such as a chain carbonate, a cyclic carbonate, and the like may be used. Of these, the chain carbonate is preferably used because of the high solubility of the electrolyte salt. In addition, the aprotic organic solvent preferably has a low viscosity.

Examples of the chain carbonates include dimethyl carbonate (DMC), diethyl carbonate (DEC), methyl ethyl carbonate (EMC), and the like.

The content of the chain carbonate in the non-aqueous solvent is not particularly limited, but is preferably 50% by mass or more.

When the content of the chain carbonate in the non-aqueous solvent is 50% by mass or more, a content of cyclic material is reduced even when the non-aqueous solvent other than the chain carbonate is a cyclic material with a high dielectric constant (for example, cyclic carbonate or cyclic ester). Therefore, even when a non-aqueous electrolyte solution having a high concentration of 2 M or more is prepared, the viscosity of the non-aqueous electrolyte solution decreases, and impregnation and ion diffusion into the electrode of the non-aqueous electrolyte solution become favorable.

Examples of the cyclic carbonates include propylene carbonate (PC), ethylene carbonate (EC), butylene carbonate (BC), vinylene carbonate (VC), and the like.

The non-aqueous solvent other than the carbonate organic solvent includes, for example, ester-based organic solvents such as a cyclic ester, a chain ester, and the like, ether-based organic solvents such as a cyclic ether, a chain ether, and the like.

Examples of the cyclic esters include γ-butyrolactone (γBL), 2-methyl-γ-butyrolactone, acetyl-γ-butyrolactone, γ-valerolactone, and the like.

Examples of the chain esters include alkyl propionate ester, dialkyl malonate ester, alkyl acetate ester (for example, methyl acetate (MA), ethyl acetate), alkyl formate ester (for example, methyl formate (MF), ethyl forate), and the like.

Examples of the cyclic ethers include tetrahydrofuran, alkyltetrahydrofuran, alkoxytetrahydrofuran, dialkoxytetrahydrofuran, 1,3-dioxolane, alkyl-1,3-dioxolane, 1,4-dioxolane, and the like.

Examples of the linear ethers include 1,2-dimethoxyethane (DME), diethyl ether, ethylene glycol dialkyl ether, diethylene glycol dialkyl ether, triethylene glycol dialkyl ether, tetraethylene glycol dialkyl ether, and the like.

### [Electrolyte Salt]

As electrolyte salts, there is no particular limitation if the ionic conductivity is high and the salt can be dissolved in the non-aqueous solvent.

The electrolyte salt preferably includes halogen atoms.

The electrolyte salt can be constituted from cations or anions.

Examples of the cations constituting the electrolyte salt include lithium ions (lithium salts) and the like.

Examples of the anions constituting the electrolyte salt include BF₄⁻, PF₆⁻, AsF₆⁻, CF₃SO₃⁻, (CF₃SO₂)₂N⁻, (C₂F₅SO₂)₂N⁻, and the like.

The lithium salts are not particularly limited and can be appropriately selected depending on a purpose.

Examples of the lithium salts include lithium hexafluorophosphate (LiPF₆), lithium borofluoride (LiBF₄), lithium arsenide (LiAsF₆), lithium trifluorometasulfonate (LiCF₃SO₃), lithium bis (trifluoromethylsulfonyl) imide (LiN(CF₃SO₂)₂), lithium bis (pentafluoroethylsulfonyl) imide (LiN(C₂F₅SO₂)₂), and the like.

Among these, LiPF₆ is preferably used from the viewpoint of ionic conductivity, and LiBF₄ is preferably used from the viewpoint of stability.

The electrolyte salt may be used alone or two or more electrolyte salts may be used in combination.

The concentration of the electrolyte salt in the non-aqueous electrolyte solution can be appropriately selected depending on the purpose. When the non-aqueous electrical storage element is a swing type, the concentration of the electrolyte salt in the non-aqueous electrolyte solution is preferably 1 mol/L to 2 mol/L. When the non-aqueous electrical storage element is a reservoir type, the concentration of the electrolyte salt in the non-aqueous electrolyte solution is preferably 2 mol/L to 4 mol/L.

### [Liquid Discharge Device]

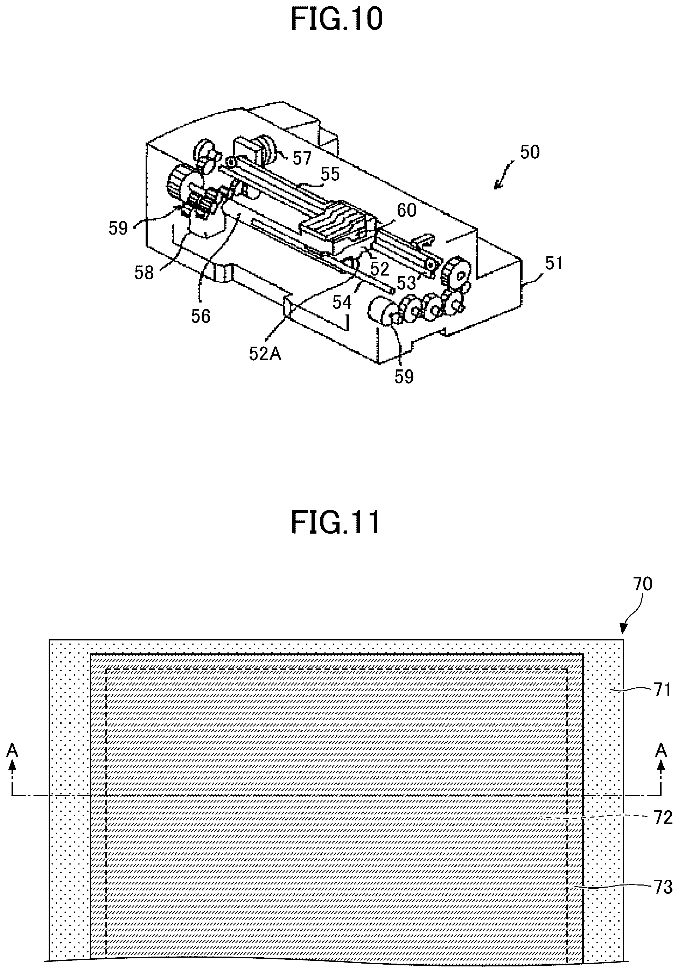

FIG. 10 indicates an example of an ink jet printing device as a liquid discharge device. The ink jet printing device 50 includes a body housing 51, a carriage 52, guide shafts 53 and 54, a timing belt 55, a platen 56, a main scan motor 57, a sub-scan motor 58, and a gear mechanism 59.

The ink jet printing device 50 includes a cartridge 60. The cartridge 60 contains the liquid composition of the present embodiment. The cartridge 60 is housed in the carriage 52 within the body housing 51. In this manner, the liquid composition is supplied from the cartridge 60 to a recording head 52A mounted on the carriage 52. The recording head 52A can discharge the liquid composition.

The recording head 52A mounted on the carriage 52 is guided to and moves through the guide shafts 53 and 54 by the timing belt 55 which is driven by the main scan motor 57. Additionally, an absorbing medium is disposed at a position facing the recording head 52A by the platen 56.

### [Method of Using Liquid Composition]

A method of using the liquid composition, for example, is to apply the liquid composition onto a substrate. When the liquid composition is applied on the substrate, the ink jet printing device 50 described above may be used.

The substrate is preferably an absorbent medium which can absorb the liquid composition. An example of the substrate capable of absorbing the liquid composition is, for example, a porous membrane.

The porous membrane is not particularly limited and may be selected according to a purpose.
When the electrode substrate having the electrode composite material layer (the negative composite material layer and the positive composite material layer) containing, for example, a particulate electrode active material (the negative electrode active material and the positive electrode active material) is used as the porous membranes, a separator-integrated electrode can be manufactured.

Examples of the negative electrode active materials include carbon materials capable of intercalating or de-intercalating lithium ions, such as metallic lithium, lithium alloy, carbon, graphite, and the like, a conductive polymer doped with lithium ions, and the like.

Examples of the positive electrode active materials include graphite fluoride represented by the general formula (CFx)n, metal oxides such as CoLiO₂, MnO₂, V₂O₅, CuO, Ag₂CrO₄, TiO₂, and the like; and metal sulfides such as CuS and the like.

The electrode substrate is not particularly limited and may be appropriately selected depending on a purpose. Examples of electrode substrates include copper foil, aluminum foil, and the like.

In addition to the substrate of the above, for example, a substrate used in a reflective display device, an electrode layer used in printed electronics, and the like can be used.

### [Separator-Integrated Electrode]

The liquid composition according to the present embodiment is used for forming a separator-integrated electrode. That is, the separator-integrated electrode can be formed by using the functional material containing the above-mentioned liquid composition.

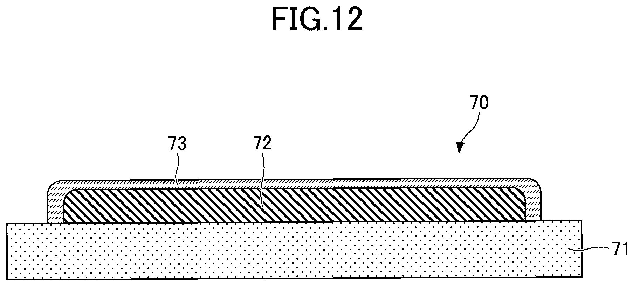

FIG. 11 is a schematic configuration diagram illustrating an example of the separator-integrated electrode. FIG. 12 is a cross-sectional view taken along line A-A in FIG. 11. The separator-integrated electrode represents the electrode having sequentially formed electrode composite material layer and particle layer as the functional layer on the electrode substrate. The separator-integrated electrode can be formed by applying the liquid composition of the present embodiment.

In the separator-integrated electrode 70, the electrode composite material layer 72 and the particle layer 73 are formed sequentially on the electrode substrate 71. When the particle layer 73 is formed, the liquid composition of the present embodiment is used.

The use of the separator-integrated electrode 70 eliminates the need to wind and laminate the electrodes and separators separately when manufacturing the electrochemical device, and thus greatly improves the manufacturing efficiency of the electrochemical device. In addition, it is expected that the occurrence of misalignment between the electrode and the separator in the winding and laminating processes can be suppressed, and the reliability of the electrochemical element can be improved.

The energy storage device (electrochemical element) using the separator-integrated electrode is not particularly limited, and can be appropriately selected depending on a purpose. Examples of the energy storage device (electrochemical device) using the separator-integrated electrode include a lithium ion secondary battery, a magnesium ion secondary battery, a sodium ion secondary battery, a sodium secondary battery, and the like.

Examples of such energy storage devices include, but are not limited to, vehicles with in-vehicle batteries, smartphones, notebook PCs, pen input PCs, mobile PCs, electronic book players, cellular phones, portable faxes, portable copies, portable printers, headphone stereos, video movies, liquid crystal televisions, hand held cleaners, portable CDs, mini disks, transceivers, electronic pocketbooks, electronic calculators, memory cards, portable tape recorders, radio, backup power supplies, motors, lights, toys, game machines, watches, strobes, cameras, and the like.

### [Formation of Particle Layer]

An example of the functional film prepared by applying the liquid composition to the substrate is a particle layer for providing an insulating function to a separator-integrated electrode in order to prevent short circuiting of the positive and negative electrodes to the electrochemical device. In this case, the thickness of the particle layer is preferably in the range from 1 µm to 10 µm. If the film thickness is less than 1 µm, it is difficult to obtain the necessary insulating function. If the film thickness is greater than 10 µm, there is a concern that the property of the electrochemical device may be deteriorated.

The functional material of the present embodiment including the liquid composition described above can exert effects of the liquid composition described above. Specifically, it is easy to re-disperse the inorganic particles in the liquid composition even when the inorganic particles are self-weight precipitated after the liquid composition is stored for use in the formation of functional materials. Therefore, it is possible to suppress the unevenness in coating when the liquid composition is applied to the substrate. Accordingly, it is possible to improve the performance of the device obtained by using the functional material of the present embodiment.

The functional material of the present embodiment is used to form the separator-integrated electrode as described above, and the separator-integrated electrode can exert effects of the functional materials. Specifically, the separator-integrated electrode is formed with use of the functional material containing the liquid composition as described above, and the liquid composition, which can be easily re-dispersed after storage, can be applied on the substrate. Thereby, it prevents uneven coating. Therefore, it is possible to improve the performance of the separator-integrated electrode obtained by using the functional material according to the present embodiment.

The energy storage device of the present embodiment is formed using the functional material described above, and the energy storage device can exert effects of the functional material described above. Specifically, the energy storage device is formed with use of the functional material containing the liquid composition as described above, and the liquid composition, which can be easily re-dispersed after storage, can be applied on the substrate. Thereby, it prevents uneven coating. Therefore, according to the present embodiment, the performance of the energy storage device fabricated by using the above-described functional material can be increased.

### [Example]

Hereinafter, the present embodiment will be further described with reference to examples. In addition, various tests and evaluations shall be conducted in accordance with the following methods. "Parts" and "%" are by mass unless otherwise noted.

### (Example 1)

### [Preparation of Mixed Ink]

46.7 parts of ethyl lactate and 11.28 parts of hexylene glycol were added to prepare a mixed solvent, and 2 parts of a surfactant (Maria Rim (TM) AKM-0513, manufactured by NOF Corporation) and 40 parts of an α-alumina (a D50 after dispersion was 202 nm and the percentage of the second inorganic particles in the total amount of the first inorganic particles was adjusted to 2.5%) were added to the mixed solvent, and the mixture was stirred. The first inorganic particles and the second inorganic particles are both α-alumina.

Then, 12 parts of zirconia beads in 0.2 mm diameter were added to the mixture and stirred for 1 minute at a rotational speed of 1,500 rpm at -20°C using a pulverizer (Nano Pulverizer NP-100, manufactured by Thinky Corporation). After that, the pulverized mixture was passed through a 25 µm filter (Nylon Mesh #419, manufactured by Clever), and the zirconia beads were removed to prepare a mixed ink (1).

### [Extraction of Supernatant Residue by Centrifugation]

12-mL of the prepared mixed ink (1) was placed in a 15-mL centrifuge tube and centrifuged at 3,000 rpm for 20 minutes using a centrifuge (H-103N, manufactured by Kokusan Co., Ltd.) to collect 5 g of the supernatant. The above operation was repeated twice to obtain 10 g of a residual liquid (1).

### [Measurement of Solid Content]

The solid content of the residual liquid (1) was measured using a heat-drying type Moisture Analyzer (ML50, manufactured by A&D Company, Limited.). The residual liquid (1) was gently stirred, and approximately 1.5 g of the residual liquid (1) was collected using a dropper to measure the solid content of the residual liquid (1). In addition, since 2% of the surfactant is included in the solid content in addition to the inorganic particles in the solid content, the solid content (concentration of the solid content) of the inorganic particles was determined by subtracting 2 from the measured value. The solids concentration was 42%.

### [Evaluation of Re-dispersibiility]

400 mL of the prepared mixed ink (1) was placed in a bottle, and the bottle was closed with a lid and allowed to stand for 30 days at room temperature. Subsequently, stirring was performed for a predetermined time using a stirring device (SKH-40SA manufactured by Misugi Ltd.), and 10 mL of the supernatant of the mixed ink (1) was collected to obtain the re-dispersion liquid (1). The solid content and particle size of the re-dispersion liquid (1) were evaluated according to the following criteria to evaluate the re-dispersibility.

### [Solid Content of Re-dispersion Liquid]

The solid content of the re-dispersion liquid (1) was measured using a heat-drying type Moisture Analyzer (ML50, manufactured by A&D Company, Limited.). The supernatant (1) was gently stirred, and approximately 1.0 g of the supernatant (1) was collected using a dropper to measure the solid content of the re-dispersion liquid (1). Stirring time until the solid content of the supernatant of the stirred liquid composition returned within ±3% of the solid content of the liquid composition prior to stationary storage was set as evaluation criteria as follows, and the solid content was evaluated. Evaluation criteria A, B, and C are feasible levels.

### [Evaluation Criteria]

A: Stirring time is less than 60 minutes.
B: Stirring time is in the range from 60 minutes to less than 90 minutes.
C: Stirring time is in the range from 90 minutes to less than 120 minutes.
D: Stirring time is equal to or more than 120 minutes.

### [Particle Size of Re-dispersion Liquid]

The re-dispersion liquid (1) was diluted so that the solid content was to be 10% by mass or less. Subsequently, the median size D50 of the liquid composition was measured using Fiber-Optics Particle Analyzer (FPAR-1000, manufactured by Otsuka Electronics Co., Ltd.). The change rate (particle size) from the particle size of the liquid composition prior to storage was evaluated. The evaluation criteria A, B, and C are feasible levels.

### [Evaluation Criteria]

A: Change in the particle size is less than ±5%.
B: Change in the particle size is in the range from ±5 to less than ±10%.
C: Change in the particle size is in the range from ±10% to less than ±15%.
D: Change in the particle size is ±15% or more.

### [Discharge Property of Re-dispersion Liquid]

A discharge property of the re-dispersion liquid (1) was evaluated with use of an ink jet head (MH2420, manufactured by Ricoh Co., Ltd.).

### [Evaluation Criteria]

Favorable: Total of 384 nozzles discharge continuously for 10 minutes.
Poor: Discharging failure occurs in some nozzles.

### (Example 2)

Example 2 was performed to prepare a mixed ink (2) in the same manner as in Example 1, except that the α-alumina was changed to another α-alumina (a D50 after dispersion was 397 nm and the percentage of the second inorganic particles in the total amount of the first inorganic particles was adjusted to 2.2%). The mixed ink (2) was evaluated in the same manner as in Example 1.

### (Example 3)

Example 3 was performed to prepare a mixed ink (3) in the same manner as in Example 1, except that the α-alumina was changed to another α-alumina (a D50 after dispersion was 500 nm and the percentage of the second inorganic particles in the total amount of the first inorganic particles was adjusted to 1.9%) and the surfactant was changed to another surfactant (DISPERBYK (Registered Trademark)-2155, manufactured by BYK). The mixed ink (3) was evaluated in the same manner as in Example 1.

### (Example 4)

Example 4 was performed to prepare a mixed ink (4) in the same manner as in Example 3, except that the α-alumina was changed to another α-alumina (a D50 after dispersion was 613 nm and the percentage of the second inorganic particles in the total amount of the first inorganic particles was adjusted to 1.8%). The mixed ink (4) was evaluated in the same manner as in Example 1.

### (Example 5)

Example 5 was performed to prepare a mixed ink (5) in the same manner as in Example 1, except that the α-alumina was changed to another α-alumina (a D50 after dispersion was 997 nm and the percentage of the second inorganic particles in the total amount of the first inorganic particles was adjusted to 1.8%) and the surfactant was changed to another surfactant (MALIALIM (Registered Trademark) SC-0708A, manufactured by NOF Corporation). The mixed ink (5) was evaluated in the same manner as in Example 1.

### (Example 6)

Example 6 was performed to prepare a mixed ink (6) in the same manner as in Example 1, except that the solvent was changed to 58 parts of ethyl lactate and the α-alumina was changed to another α-alumina (a D50 after dispersion was 202 nm and the percentage of the second inorganic particles in the total amount of the first inorganic particles was adjusted to 2.5%). The mixed ink (6) was evaluated in the same manner as in Example 1.

### (Example 7)

Example 7 was performed to prepare a mixed ink (7) in the same manner as in Example 6, except that the α-alumina was changed to another α-alumina (a D50 after dispersion was 397 nm and the percentage of the second inorganic particles in the total amount of the first inorganic particles was adjusted to 2.2%). The mixed ink (7) was evaluated in the same manner as in Example 1.

### (Example 8)

Example 8 was performed to prepare a mixed ink (8) in the same manner as in Example 1, except that ethyl lactate was changed to 46.72 parts of dimethyl sulfoxide (DMSO); the α-alumina was changed to another α-alumina (a D50 after dispersion was 202 nm and the percentage of the second inorganic particles in the total amount of the first inorganic particles was adjusted to 3.0%); and the surfactant was changed to another surfactant (MALIALIM (Registered Trademark) HKM-150A, manufactured by NOF Corporation). The mixed ink (8) was evaluated in the same manner as in Example 1.

### (Example 9)

Example 9 was performed to prepare a mixed ink (9) in the same manner as in Example 8, except that dimethyl sulfoxide (DMSO) was changed to methyl ethyl ketone (MEK) and the α-alumina was changed to another α-alumina (a D50 after dispersion was 202 nm and the percentage of the second inorganic particles in the total amount of the first inorganic particles was adjusted to 3.2%). The mixed ink (9) was evaluated in the same manner as in Example 1.

### (Example 10)

Example 10 was performed to prepare a mixed ink (10) in the same manner as in Example 9, except that methyl ethyl ketone (MEK) was changed to isopropyl alcohol (IPA). The mixed ink (10) was evaluated in the same manner as in Example 1.

### (Example 11)

Example 11 was performed to prepare a mixed ink (11) in the same manner as in Example 8, except that dimethyl sulfoxide (DMSO) was changed to ethanol. The mixed ink (11) was evaluated in the same manner as in Example 1.

### (Example 12)

Example 12 was performed to prepare a mixed ink (12) in the same manner as in Example 8, except that dimethyl sulfoxide (DMSO) was changed to diisobutyl ketone (DIBK) and the α-alumina was changed to another α-alumina (a D50 after dispersion was 202 nm and the percentage of the second inorganic particles in the total amount of the first inorganic particles was adjusted to 2.8%). The mixed ink (12) was evaluated in the same manner as in Example 1.

### (Example 13)

Example 13 was performed to prepare a mixed ink (13) in the same manner as in Example 3, except that hexylene glycol was changed to ethylene glycol and the α-alumina was changed to another α-alumina (a D50 after dispersion was 613 nm and the percentage of the second inorganic particles in the total amount of the first inorganic particles was adjusted to 4.0%). The mixed ink (13) was evaluated in the same manner as in Example 1.

### (Example 14)

Example 14 was performed to prepare a mixed ink (14) in the same manner as in Example 13, except that ethylene glycol was changed to propylene glycol. The mixed ink (14) was evaluated in the same manner as in Example 1.

### (Example 15)

Example 15 was performed to prepare a mixed ink (15) in the same manner as in Example 1, except that the solvent was changed to 58 parts of pure water; the α-alumina was changed to another α-alumina (a D50 after dispersion was 500 nm and the percentage of the second inorganic particles in the total amount of the first inorganic particles was adjusted to 3.2%); and the surfactant was changed to another surfactant (Dispersant 5023, manufactured by San Nopco Limited). The mixed ink (15) was evaluated in the same manner as in Example 1.

### (Example 16)

Example 16 was performed to prepare a mixed ink (16) in the same manner as in Example 15, except that the pure water was changed to acetone; the α-alumina was changed to another α-alumina (a D50 after dispersion was 500 nm and the percentage of the second inorganic particles in the total amount of the first inorganic particles was adjusted to 3.6%); and the surfactant was changed to another surfactant (NOPCOSPERSE (Registered Trademark) 092, manufactured by San Nopco Limited). The mixed ink (16) was evaluated in the same manner as in Example 1.

### (Example 17)

Example 17 was performed to prepare a mixed ink (17) in the same manner as in Example 16, except that the surfactant was changed to another surfactant (SN Sparse, manufactured by San Nopco Limited). The mixed ink (17) was evaluated in the same manner as in Example 1.

### (Example 18)

Example 18 was performed to prepare a mixed ink (18) in the same manner as in Example 5, except that the α-alumina was changed to a γ-alumina (a D50 after dispersion was 803 nm and the percentage of the second inorganic particles in the total amount of the first inorganic particles was adjusted to 3.2%). The mixed ink (18) was evaluated in the same manner as in Example 1.

### (Example 19)

Example 19 was performed to prepare a mixed ink (19) in the same manner as in Example 5, except that the α-alumina was changed to silica (a D50 after dispersion was 486 nm and the percentage of the second inorganic particles in the total amount of the first inorganic particles was adjusted to 2.8%). The mixed ink (19) was evaluated in the same manner as in Example 1.

### (Example 20)

Example 20 was performed to prepare a mixed ink (20) in the same manner as in Example 5, except that the α-alumina was changed to an aluminum hydroxide (a D50 after dispersion was 912 nm and the percentage of the second inorganic particles in the total amount of the first inorganic particles was adjusted to 2.0%). The mixed ink (20) was evaluated in the same manner as in Example 1.

### (Example 21)

Example 21 was performed to prepare a mixed ink (21) in the same manner as in Example 5, except that the α-alumina was changed to titanium oxide (a D50 after dispersion was 294 nm and the percentage of the second inorganic particles in the total amount of the first inorganic particles was adjusted to 2.8%). The mixed ink (21) was evaluated in the same manner as in Example 1.

### (Example 22)

### [Preparation of Inorganic Fine Particles]

100 g of the residual solution (21) was prepared by centrifuging the mixed ink (21) in the same manner as in Example 1, and concentrated using a rotary evaporator (ARE-V1200, manufactured by AS ONE Corporation) until the solid content was reduced to 50% to prepare inorganic fine particle solution (22).

### [Preparation of Mixed Ink]

A mixed solvent was prepared by adding 11.28 parts of propylene glycol to 46.72 parts of ethyl lactate. 2 parts of surfactant (DISPERBYK-2155, manufactured by BYK), 40 parts of α-alumina (α-alumina was prepared so that the D50 after dispersion was 500 nm), and 0.6 parts of fine particle solution (22) were added to the mixed solvent and stirred. The first inorganic particles correspond to α-alumina, and the second inorganic particles correspond to α-alumina in the fine particle liquid (22) (the percentage of the second inorganic particles in the total amount of the first inorganic particles was 0.8%).

Then, 12 parts of zirconia beads in 0.2 mm diameter were added to the mixture and stirred for 1 minute at a rotational speed of 1,500 rpm at -20°C using a pulverizer (Nano Pulverizer NP-100, manufactured by Thinky Corporation). After that, the pulverized mixture was passed through a 25 µm filter (Nylon Mesh #419, manufactured by Clever), and the zirconia beads were removed to prepare a mixed ink (22). The mixed ink (22) was evaluated in the same manner as in Example 1.

### (Example 23)

Example 23 was performed to prepare a mixed ink (23) in the same manner as in Example 22, except that the second inorganic particles were changed to another second inorganic particles (the percentage of the second inorganic particles in the total amount of the first inorganic particles was 1.0%). The mixed ink (23) was evaluated in the same manner as in Example 1.

### (Example 24)

Example 24 was performed to prepare a mixed ink (24) in the same manner as in Example 22, except that the second inorganic particles were changed to another second inorganic particles (percentage of the second inorganic particles in the total amount of the first inorganic particles was 3.0%). The mixed ink (24) was evaluated in the same manner as in Example 1.

### (Example 25)

Example 25 was performed to prepare a mixed ink (25) in the same manner as in Example 22, except that the second inorganic particles were changed to another second inorganic particles (percentage of the second inorganic particles in the total amount of the first inorganic particles was 5.0%). The mixed ink (25) was evaluated in the same manner as in Example 1.

### (Example 26)

Example 26 was performed to prepare a mixed ink (26) in the same manner as in Example 22, except that the second inorganic particles were changed to another second inorganic particles (percentage of the second inorganic particles in the total amount of the first inorganic particles was 5.5%). The mixed ink (26) was evaluated in the same manner as in Example 1.

### (Example 27)

Example 27 was performed to prepare a mixed ink (27) in the same manner as in Example 14, except that the α-alumina was changed to 13 parts of another α-alumina (a D50 after dispersion was 397 nm and the percentage of the second inorganic particles in the total amount of the first inorganic particles was adjusted to 3.0%) and the surfactant was changed to another surfactant (ESLEAM (Registered Trademark) AD-3172M, manufactured by NOF Corporation). The mixed ink (27) was evaluated in the same manner as in Example 1. The concentration of solid content was 15%.

### (Example 28)

Example 28 was performed to prepare a mixed ink (28) in the same manner as in Example 27, except that the amount of α-alumina was changed to 18 parts. The mixed ink (28) was evaluated in the same manner as in Example 1. The concentration of solid content was 20%.

### (Example 29)

Example 29 was performed to prepare a mixed ink (29) in the same manner as in Example 27, except that the amount of α-alumina was changed to 28 parts. The mixed ink (29) was evaluated in the same manner as in Example 1. The concentration of solid content was 30%.

### (Example 30)

Example 30 was performed to prepare a mixed ink (30) in the same manner as in Example 27, except that the amount of α-alumina was changed to 48 parts. The mixed ink (30) was evaluated in the same manner as in Example 1. The concentration of solid content was 50%.

### (Example 31)

Example 31 was performed to prepare a mixed ink (31) in the same manner as in Example 27, except that the amount of α-alumina was changed to 53 parts. The mixed ink (31) was evaluated in the same manner as in Example 1. The concentration of solid content was 55%.

### (Comparative Example 1)

Comparative Example 1 was performed to prepare a mixed ink (32) in the same manner as in Example 1, except that the α-alumina was changed to another α-alumina (a D50 after dispersion was 397 nm and the percentage of the second inorganic particles in the total amount of the first inorganic particles was adjusted to 0.0%). The mixed ink (32) was evaluated in the same manner as in Example 1. The concentration of solid content was 42%.

### (Comparative Example 2)

Comparative Example 2 was performed to prepare a mixed ink (33) in the same manner as in Comparative Example 1, except that the amount of α-alumina was changed to 13 parts. The mixed ink (33) was evaluated in the same manner as in Example 1. The concentration of solid content was 15%.

### (Comparative Example 3)

Comparative Example 3 was performed to prepare a mixed ink (34) in the same manner as in Comparative Example 1, except that the amount of α-alumina was changed to 18 parts. The mixed ink (34) was evaluated in the same manner as in Example 1. The concentration of solid content was 20%.

### (Comparative Example 4)

Comparative Example 4 was performed to prepare a mixed ink (35) in the same manner as in Comparative Example 1, except that the amount of α-alumina was changed to 28 parts. The mixed ink (35) was evaluated in the same manner as in Example 1. The concentration of solid content was 30%.

### (Comparative Example 5)

Comparative Example 5 was performed to prepare a mixed ink (36) in the same manner as in Comparative Example 1, except that the amount of α-alumina was changed to 48 parts. The mixed ink (36) was evaluated in the same manner as in Example 1. The concentration of solid content was 50%.

### (Comparative Example 6)

Comparative Example 6 was performed to prepare a mixed ink (37) in the same manner as in Comparative Example 1, except that the amount of α-alumina was changed to 53 parts. The mixed ink (37) was evaluated in the same manner as in Example 1. The concentration of solid content was 55%.

### (Comparative Example 7)

Comparative Example 7 was performed to prepare a mixed ink (38) in the same manner as in Comparative Example 1, except that the α-alumina was changed to another α-alumina (a D50 after dispersion was 202 nm and the percentage of the second inorganic particles in the total amount of the first inorganic particles was adjusted to 0.0%). The mixed ink (38) was evaluated in the same manner as in Example 1. The concentration of solid content was 42%.

### (Comparative Example 8)

Comparative Example 8 was performed to prepare a mixed ink (39) in the same manner as in Comparative Example 1, except that the α-alumina was changed to another α-alumina (a D50 after dispersion was 1,000 nm and the percentage of the second inorganic particles in the total amount of the first inorganic particles was adjusted to 0.0%). The mixed ink (39) was evaluated in the same manner as in Example 1. The concentration of solid content was 42%.

### (Comparative Example 9)

Comparative Example 9 was performed to prepare a mixed ink (40) in the same manner as in Comparative Example 1, except that the α-alumina was changed to titanium oxide (a D50 after dispersion was 408 nm and the percentage of the second inorganic particles in the total amount of the first inorganic particles was adjusted to 0.0%). The mixed ink (40) was evaluated in the same manner as in Example 1. The concentration of solid content was 42%.

### (Comparative Example 10)

### [Preparation of Mixed Ink]

A mixed solvent was prepared by adding 11.28 parts of hexylene glycol to 46.72 parts of ethyl lactate. 2 parts of surfactant (ESLEAM (Registered Trademark) AD-3172M, manufactured by NOF Corporation) and 40 parts of α-alumina (the D50 after dispersion was 397 nm and the percentage of the second inorganic particles in the total amount of the first inorganic particles was adjusted to 0.0%) were added to the mixed solvent and stirred. The concentration of solid content was 42%.

Then, 12 parts of zirconia beads in 0.2 mm diameter were added to the mixture and stirred for 1 minute at a rotational speed of 1,500 rpm at -20°C using a pulverizer (Nano Pulverizer NP-100, manufactured by Thinky Corporation). After that, the pulverized mixture was passed through a 25 µm filter (Nylon Mesh #419, manufactured by Clever), and the zirconia beads were removed to prepare a mixed ink (41). The mixed ink (41) was evaluated in the same manner as in Example 1.

### [Extraction of Supernatant Residue by Centrifugation]

12-mL of the prepared mixed ink (41) was placed in a 15-mL centrifuge tube and centrifuged at 3,000 rpm for 7.5 minutes using a centrifuge (H-103N, manufactured by Kokusan Co., Ltd.) to collect 5 g of the supernatant. The above operation was repeated three times to obtain 15 g of a residual liquid (41).

Further, 12-mL of the residual liquid (41) was placed in a 15-mL centrifuge tube and centrifuged at 3,000 rpm for 7.5 minutes and at 3,000 rpm for 30 minutes each using a centrifuge (H-103N, manufactured by Kokusan Co., Ltd.) to remove 5 g of the supernatant, thereby being prepared 10 g of the residual liquid (41). The mixed ink (41) in which the residual liquid (41) was obtained was evaluated in the same manner in the Example 1.

The results of Examples 1 to 31 and Comparative Examples 1 to 10 are indicated in Table 1.

**[Table 1]**

| | Median size after dispersbn (nm) | Solid content of residual liquid (%) | Percentage of the second inorganic particles in the totalam ount of the first inorganic particles (%) | Eva liatbn of solid content after re-dispersion | Median size after re-dispersion (nm) | Evaluatbn of particle size after re-dispersion | Discharge property |
|---|---|---|---|---|---|---|---|
| Example 1 | 202 | 1.00 | 2.5 | A | 208 | A | Favorable |
| Example 2 | 397 | 0.88 | 2.2 | A | 400 | A | Favorable |
| Example 3 | 500 | 0.76 | 1.9 | A | 512 | A | Favorable |
| Example 4 | 613 | 0.72 | 1.8 | A | 625 | A | Favorable |
| Example 5 | 997 | 0.72 | 1.8 | A | 1023 | A | Favorable |
| Example 6 | 202 | 1.00 | 2.5 | A | 210 | A | Favorable |
| Example 7 | 397 | 0.88 | 2.2 | A | 400 | A | Favorable |
| Example 8 | 202 | 1.20 | 3.0 | A | 209 | A | Favorable |
| Example 9 | 202 | 1.28 | 3.2 | A | 208 | A | Favorable |
| Example 10 | 202 | 1.28 | 3.2 | A | 212 | A | Favorable |
| Example 11 | 202 | 1.20 | 3.0 | A | 212 | A | Favorable |
| Example 12 | 202 | 1.12 | 2.8 | A | 208 | A | Favorable |
| Example 13 | 613 | 1.60 | 4.0 | A | 640 | A | Favorable |
| Example 14 | 613 | 1.60 | 4.0 | A | 636 | A | Favorable |
| Example 15 | 500 | 1.28 | 3.2 | C | 560 | C | Favorable |
| Example 16 | 500 | 1.44 | 3.6 | B | 558 | C | Favorable |
| Example 17 | 500 | 1.44 | 3.6 | B | 570 | C | Favorable |
| Example 18 | 803 | 1.28 | 3.2 | C | 852 | B | Favorable |
| Example 19 | 486 | 1.12 | 2.8 | C | 518 | B | Favorable |
| Example 20 | 912 | 0.80 | 2.0 | C | 950 | B | Favorable |
| Example 21 | 294 | 1.12 | 2.8 | B | 314 | B | Favorable |
| Example 22 | 500 | 0.32 | 0.8 | C | 579 | C | Favorable |
| Example 23 | 500 | 0.40 | 1.0 | B | 542 | B | Favorable |
| Example 24 | 500 | 1.20 | 3.0 | A | 516 | A | Favorable |
| Example 25 | 500 | 2.00 | 5.0 | B | 538 | B | Favorable |
| Example 26 | 500 | 2.20 | 5.5 | C | 582 | C | Favorable |
| Example 27 | 397 | 0.39 | 3.0 | C | 448 | C | Favorable |
| Example 28 | 397 | 0.51 | 3.0 | B | 423 | B | Favorable |
| Example 29 | 397 | 0.84 | 3.0 | A | 402 | A | Favorable |
| Example 30 | 397 | 1.44 | 3.0 | B | 421 | B | Favorable |
| Example 31 | 397 | 1.59 | 3.0 | C | 450 | C | Favorable |
| Comparative Example 1 | 397 | 0.00 | 0.0 | D | 581 | D | Poor |
| Comparative Example 2 | 397 | 0.00 | 0.0 | D | 520 | D | Poor |
| Comparative Example 3 | 397 | 0.00 | 0.0 | D | 450 | D | Poor |
| Comparative Example 4 | 397 | 0.00 | 0.0 | D | 448 | D | Poor |
| Comparative Example 5 | 397 | 0.00 | 0.0 | D | 452 | D | Poor |
| Comparative Example 6 | 397 | 0.00 | 0.0 | D | 620 | D | Poor |
| Comparative Example 7 | 202 | 0.00 | 0.0 | D | 266 | D | Poor |
| Comparative Example 8 | 1000 | 0.00 | 0.0 | D | 1204 | D | Poor |
| Comparative Example 9 | 408 | 0.00 | 0.0 | D | 1601 | D | Poor |
| Comparative Example 10 | 397 | 0.00 | 0.0 | D | 440 | D | Poor |

From Table 1, in Examples 1 to 31, the solid content, particle size, and discharge property after re-dispersing the inorganic particles in the liquid compositions were all favorable.

On the other hand, in Comparative Examples 1 to 10, the solid content and the discharge property after redispersing the inorganic particles in the liquid compositions were all poor. Comparative Examples 1, 2, and 6 to 9 were also poor in the particle size after redispersing the inorganic particles in the liquid composition.

While embodiments of the invention have been described, the invention is not limited to specific embodiments, and various modifications and variations are possible within the scope of the invention as claimed.

## Claims

1. A liquid composition comprising:
first inorganic particles having a median size in a range from 200 nm to less than 1,000 nm, the median size referring to a particle size (D50) with a cumulative frequency of 50% on a number basis, as measured by a Fiber-Optics Particle Analyzer as described herein;
second inorganic particles having an average particle size of less than 30 nm, the average particle size referring to the average of the longitudinal diameter of the particles as measured by Transmission Electron Microscope (TEM) observation;
a dispersant; and
a solvent,
wherein a content of the second inorganic particles is in a range from 1% by mass to 5% by mass with respect to the total amount of the first inorganic particles.

2. The liquid composition according to claim 1, wherein the first inorganic particles are α-alumina.

3. The liquid composition according to claim 1, wherein a percentage of a solid content of α-alumina contained in the liquid composition is in a range from 20% by mass to 50% by mass of the liquid composition.

4. The liquid composition according to claim 1, wherein the solvent is a non-aqueous solvent.

5. The liquid composition according to claim 1, wherein the dispersant is a nonionic surfactant.

6. The liquid composition according to claim 1, wherein the dispersant has an oligoether group.

7. A functional material comprising the liquid composition of claim 1.

8. A separator-integrated electrode, wherein the separator-integrated electrode is formed using the functional material of claim 7.

9. An energy storage device, wherein the energy storage device is formed using the functional material of claim 7.

## Patentansprüche

1. Flüssige Zusammensetzung, umfassend:
erste anorganische Partikel mit einer mittleren Größe im Bereich von 200 nm bis weniger als 1.000 nm, wobei sich die mittlere Größe auf eine Partikelgröße (D50) mit einer kumulierten Häufigkeit von 50 % auf Zahlenbasis bezieht, gemessen mit einem faseroptischen Partikelanalysator, wie hierin beschrieben;
zweite anorganische Partikel mit einer durchschnittlichen Partikelgröße von weniger als 30 nm, wobei sich die durchschnittliche Partikelgröße auf den Durchschnittswert des Längsdurchmessers der Partikel bezieht, wie er durch Transmissionselektronenmikroskopie (TEM) gemessen wird;
ein Dispergiermittel; und
ein Lösungsmittel,
wobei ein Gehalt der zweiten anorganischen Partikel in einem Bereich von 1 Masse-% zu 5 Masse-% bezogen auf die gesamte Menge der ersten anorganischen Partikel liegt.

2. Flüssige Zusammensetzung nach Anspruch 1, wobei es sich bei den ersten anorganischen Partikeln um α-Aluminiumoxid handelt.

3. Flüssige Zusammensetzung nach Anspruch 1, wobei der Prozentsatz des Feststoffgehalts an α-Aluminiumoxid, das in der flüssigen Zusammensetzung enthalten ist im Bereich von 20 Masse-% bis 50 Masse-% der flüssigen Zusammensetzung liegt.

4. Flüssige Zusammensetzung nach Anspruch 1, wobei es sich bei dem Lösungsmittel um ein nicht-wässriges Lösungsmittel handelt.

5. Flüssige Zusammensetzung nach Anspruch 1, wobei das Dispergiermittel ein nichtionisches Tensid ist.

6. Flüssige Zusammensetzung nach Anspruch 1, wobei das Dispergiermittel eine Oligoethergruppe aufweist.

7. Funktionelles Material, umfassend die flüssige Zusammensetzung nach Anspruch 1.

8. Elektrode, die in den Separator integriert ist, wobei die in den Separator integrierte Elektrode unter Verwendung des funktionellen Materials nach Anspruch 7 ausgebildet ist.

9. Energiespeichervorrichtung, wobei die Energiespeichervorrichtung unter Verwendung des funktionellen Materials nach Anspruch 7 ausgebildet ist.

## Revendications

1. Composition liquide comprenant :
des premières particules inorganiques présentant une taille médiane dans une plage allant de 200 nm à moins de 1000 nm, la taille médiane se rapportant à une taille de particules (D50) avec une fréquence cumulée de 50 % sur une base en nombre, telle que mesurée par un analyseur de particules par fibre optique tel que décrit dans ce document ;
des secondes particules inorganiques présentant une taille de particules moyenne de moins de 30 nm, la taille de particules moyenne se rapportant à la moyenne du diamètre longitudinal des particules tel que mesuré par une observation au microscope électronique en transmission (MET) ;
un dispersant ; et
un solvant,
dans laquelle une teneur en secondes particules inorganiques se situe dans une plage de 1 % en masse à 5 % en masse par rapport à la quantité totale des premières particules inorganiques.

2. Composition liquide selon la revendication 1, dans laquelle les premières particules inorganiques sont de l'α-alumine.

3. Composition liquide selon la revendication 1, dans laquelle un pourcentage d'une teneur en matière solide d'α-alumine contenue dans la composition liquide se situe dans une plage allant de 20 % en masse à 50 % en masse de la composition liquide.

4. Composition liquide selon la revendication 1, dans laquelle le solvant est un solvant non aqueux.

5. Composition liquide selon la revendication 1, dans laquelle le dispersant est un tensioactif non ionique.

6. Composition liquide selon la revendication 1, dans laquelle le dispersant présente un groupe oligoéther.

7. Matériau fonctionnel comprenant la composition liquide selon la revendication 1.

8. Électrode à séparateur intégré, dans laquelle l'électrode à séparateur intégré est formée à l'aide du matériau fonctionnel selon la revendication 7.

9. Dispositif de stockage d'énergie, dans lequel le dispositif de stockage d'énergie est formé à l'aide du matériau fonctionnel selon la revendication 7.
